(19) Europäisches Patentamt
European Patent Office
Office européen des brevets

(11) **EP 2 264 417 B1**

(12) **FASCICULE DE BREVET EUROPEEN**

(45) Date de publication et mention de la délivrance du brevet:
**05.09.2012 Bulletin 2012/36**

(51) Int Cl.:
*G01K 11/26* (2006.01)          *G01L 1/16* (2006.01)
*G01L 9/00* (2006.01)          *H03H 3/08* (2006.01)

(21) Numéro de dépôt: **10166007.4**

(22) Date de dépôt: **15.06.2010**

(54) **Procédé de fabrication collective de capteurs de température et/ou de déformation sans calibrage par appariement de résonateurs**

Verfahren zur Herstellung von Batchen von Temperatur- oder Verformungssensoren ohne Kalibrierung bei Anpassung von Resonatoren

Method of manufacturing batches of temperature or strain sensors without calibration by matching resonators

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **19.06.2009 FR 0902993**

(43) Date de publication de la demande:
**22.12.2010 Bulletin 2010/51**

(73) Titulaire: **Senseor**
**06250 Mougins (FR)**

(72) Inventeurs:
• **Le Guen, Jean-François**
**06560, VALBONNE (FR)**

• **Chommeloux, Luc**
**06110, LE CANNET (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A1- 2 907 284    FR-A1- 2 922 305**

**Description**

Le domaine de l'invention est celui des capteurs passifs à ondes acoustiques de surface encore couramment dénommés « SAW » permettant d'effectuer par exemple des mesures de température et/ou de pression/contraintes à distance et plus précisément celui de la fabrication collective de tels capteurs.

Un type de capteur de température peut typiquement être constitué de deux résonateurs SAW désignés $R_1$ et $R_2$ et procéder à des mesures différentielles. Pour cela les deux résonateurs sont conçus pour avoir des fréquences de résonance différentes.

Typiquement, chaque résonateur est composé d'un transducteur à peignes interdigités, constitué d'une alternance d'électrodes qui se répètent avec une certaine périodicité appelée période de métallisation, déposées sur un substrat piézoélectrique pouvant avantageusement être du quartz. Les électrodes, avantageusement en aluminium ou alliage d'aluminium (réalisées par un procédé de photolithographie) présentent une faible épaisseur devant la période de métallisation (typiquement, quelques centaines de nanomètres à quelques micromètres). Par exemple pour un capteur fonctionnant à 433 MHz, l'épaisseur de métal (aluminium par exemple) utilisée peut être de l'ordre de 100 à 300 nanomètres, la période de métallisation et la largeur d'électrode pouvant être respectivement de l'ordre de 3.5 $\mu$m et 2.5 $\mu$m.

Un des ports du transducteur est par exemple relié au point chaud d'une antenne RadioFréquence (RF) et l'autre à la masse ou bien les deux ports sont reliés à l'antenne si celle-ci est symétrique (dipôle par exemple). Les lignes de champ ainsi créées entre deux électrodes de polarités différentes donnent naissance à des ondes acoustiques de surface dans la zone de recouvrement des électrodes.

Le transducteur est une structure bi-directionnelle c'est à dire que l'énergie rayonnée vers la droite et l'énergie rayonnée vers la gauche ont la même intensité. En disposant de part et d'autre du transducteur des électrodes, celles-ci jouant le rôle de réflecteur, on réalise un résonateur, chaque réflecteur réfléchissant partiellement l'énergie émise par le transducteur.

Si l'on multiplie le nombre de réflecteurs, on crée une cavité résonante caractérisée par une certaine fréquence de résonance. Cette fréquence dépend en premier lieu de la vitesse de propagation des ondes sous le réseau, celle-ci dépendant principalement de l'état physique du substrat, et donc sensible par exemple à la température. Dans ce cas, c'est le paramètre qui est mesuré par le système d'interrogation et c'est à partir de cette mesure qu'une température peut être calculée.

On rappelle que la variation de la fréquence de résonance en fonction de la température d'un résonateur sur quartz est déterminée par la formule suivante :

$$f(T) = f_0\left[1 + CTF_1\,(T\text{-}T_0) + CTF_2\,(T\text{-}T_0)^2\right]$$

avec $f_0$ la fréquence à $T_0$, $T_0$ étant la température de référence (25˚C par convention), $CTF_1$ le coefficient du premier ordre (ppm/˚C) et $CTF_2$ le coefficient du second ordre (ppb/˚C$^2$).

Les deux résonateurs peuvent utiliser des directions de propagations des ondes différentes, réalisées par une inclinaison des peignes d'électrodes interdigitées différentes sur un même substrat par exemple de quartz.

Les deux résonateurs peuvent également avantageusement utiliser des coupes différentes de quartz permettant de leur conférer des fréquences de résonance différentes, en l'occurrence pour le résonateur $R_1$ la coupe de quartz (YXl)/$\theta_1$ et pour le résonateur $R_2$ : la coupe (YXl)/$\theta_2$, en référence à la norme IEEE explicitée ci-après, les deux résonateurs utilisant la propagation colinéaire à l'axe cristallographique X .

Quelle que soit la solution adoptée pour créer des fréquences de résonance différentes, le fait d'utiliser une structure différentielle présente plusieurs avantages. Le premier est que la différence de fréquence des résonateurs est presque linéaire en fonction de la température et les non-linéarités résiduelles prises en compte par le calibrage du capteur. Un autre avantage de la structure différentielle réside dans le fait que l'on peut s'affranchir de la majeure partie des effets de vieillissement.

Il est rappelé qu'on appelle opération de calibrage la détermination de paramètres dits de calibrage $A_0$, $A_1$ et $A_2$ de la fonction suivante :

$$T = A_0 \pm \sqrt{A_1 + A_2\,\Delta f}$$

Lorsque ces paramètres sont définis, une mesure différentielle de fréquence permet alors de déterminer une température.

De manière générale, les résonateurs sont réalisés de façon collective sur des wafers de diamètre 100 mm, typiquement on peut être amenés à fabriquer sur un même wafer environ 1000 pièces. On dispose alors de 1000 pièces de résonateurs $R_1$ et de 1000 pièces de résonateurs $R_2$, chaque capteur de température comportant un couple de résonateurs $R_1$ et $R_2$.

L'opération de calibrage est néanmoins coûteuse en temps puisqu'elle nécessite de mesurer pour chaque capteur la différence de fréquence entre les deux résonateurs à trois températures différentes au minimum et nécessite de plus une sérialisation de chaque capteur (correspondant à l'identification pour chaque capteur d'un couple capteur - coefficients de calibrage).

On peut par exemple envisager de stocker les coefficients de calibrage $A_0$, $A_1$, $A_2$ dans le système d'interrogation. Cette configuration nécessite en cas de changement de capteur de stocker les nouveaux coefficients dans le système d'interrogation.

Un des buts recherchés dans la présente invention est de réaliser un capteur de température sans calibrage tout en conservant une bonne précision sur la mesure de température.

Pour cela il est nécessaire de maîtriser d'une part la dispersion de la différence de fréquences de résonance des résonateurs $R_1$ et $R_2$, et d'autre part la dispersion des coefficients $CTF_1$ et $CTF_2$ (coefficients de température du premier et second ordre), ou du moins de la différence de ces coefficients $CTF_1$ et $CTF_2$ lorsqu'on réalise une mesure différentielle comme cela est démontré ci-après et grâce aux différents rappels suivants :

1) Concernant l'orientation cristalline :

Afin de définir les orientations cristallines, on utilise la norme IEEE. Cette désignation utilise les 2 repères suivants :

- le repère cristallographique (X,Y,Z).
- le repère de travail ($w,l,t$) défini par la surface du substrat (normale à $\vec{l}$) et la direction de propagation des ondes de surface (axe $\vec{l}$).

La désignation d'une coupe est du type (YX $w/t$)/φ/θ/ψ avec :

- YX deux axes cristallins permettant de placer le repère de travail par rapport au repère cristallographique avant toute rotation. Le premier axe est suivant l'axe t, normal à la surface alors que le second est suivant l'axe 1. Le troisième axe du repère de travail $w$ est donné par le sens du trièdre direct ($w,l,t$).
- $w, l, t$ indique une suite d'axes autour desquels peuvent être effectuées des rotations successives d'angles respectifs φ, θ, ψ. Dans la suite de la description, les variables φ, θ, ψ sont associées à des rotations autour des axes respectifs $w, l, t$.

2) Concernant la géométrie du résonateur SAW :

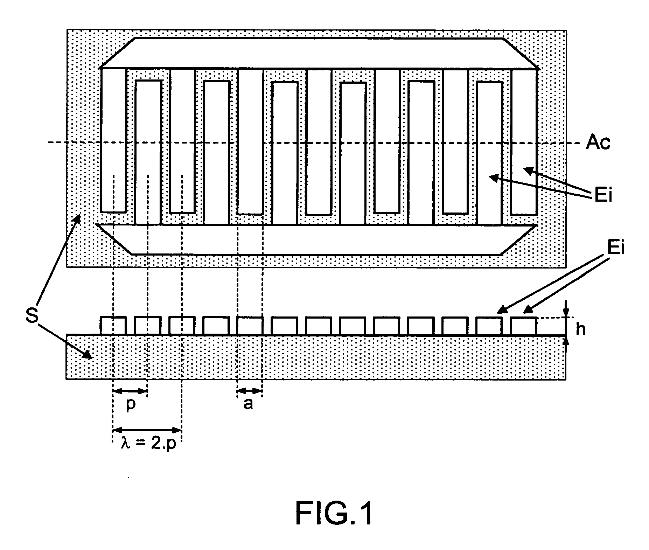

Les dimensions caractérisant un dispositif à ondes de surface constitué de peignes d'électrodes interdigitées Ei, symétriques par rapport à un axe Ac et déposées à la surface d'un substrat piézoélectrique sont notées de la façon suivante et illustrées en figure 1 :

- la période de métallisation notée : « $p$ » ;
- la longueur d'onde notée : « λ », avec λ = 2.$p$ ;
- la largeur d'électrode notée : « $a$ » ;
- l'épaisseur de métallisation notée « $h$ ».

En général, pour s'affranchir de la fréquence de fonctionnement du dispositif, on utilise plutôt les variables normalisées suivantes :

- le taux de métallisation $\dfrac{a}{p}$, rapport de largeur d'électrode sur la période de métallisation ;

- l'épaisseur normalisée de métallisation $\dfrac{h}{\lambda}$ rapport de l'épaisseur de métallisation sur la longueur d'onde λ = 2.$p$.

3) <u>Concernant les lois de variations en température de 2 résonateurs à ondes de surface :</u>

Comme défini précédemment il est possible d'exprimer les comportements fréquentiels des deux résonateurs respectivement par les équations suivantes :

$$\text{Pour le résonateur } R_1 : f_1(T) = f_{01}.(1 + C_{11}.(T - T_0) + C_{21}.(T - T_0)^2) \qquad (1)$$

Avec :

$f_1(T)$ la fréquence de résonance de $R_1$ en fonction de la température
$f_{01}$ la fréquence de résonance de $R_1$ à la température $T_0$ (généralement 25 ˚C) ;
$C_{11}$ le coefficient de température du 1er ordre (appelé généralement CTF1) du résonateur $R_1$ ;
$C_{21}$ le coefficient de température du 2ème ordre (appelé généralement CTF2) de $R_1$ ;

$$\text{Pour le résonateur } R_2 : f_2(T) = f_{02}.(1 + C_{12}.(T - T_0) + C_{22}.(T - T_0)^2) \qquad (2)$$

Avec :

$f_2(T)$ la fréquence de résonance de $R_2$ en fonction de la température
$f_{02}$ la fréquence de résonance de $R_2$ à la température $T_0$ (généralement 25 ˚C) ;
$C_{12}$ le coefficient de température du 1er ordre (appelé généralement CTF1) de $R_2$ ;
$C_{22}$ le coefficient de température du 2ème ordre (appelé généralement CTF2) de $R_2$;

Dans le cas général, la fréquence de résonance à 25 ˚C et les coefficients de température du 1er et 2ème ordres dépendent principalement :

- de l'orientation cristalline choisie ;
- de la période de métallisation « $p$ » pour $f_0$ uniquement ;

- de l'épaisseur normalisée de métallisation $\dfrac{h}{\lambda}$ ;

- du taux de métallisation $\dfrac{a}{p}$.

Et de manière générale, la différence de fréquence est une fonction de la température qui peut donc s'exprimer de la façon suivante :

$$\Delta f(T) = f_2(T) - f_1(T)$$
$$= f_{02} - f_{01} + (C_{12}.f_{02} - C_{11}.f_{01}).(T - T_0) + (C_{22}.f_{02} - C_{21}.f_{01}).(T - T_0)^2 \quad (3)$$
$$= \Delta_0 + s.(T - T_0) + \varepsilon.(T - T_0)^2$$

Avec :

$\Delta_0 = f_{02} - f_{01}$ la différence de fréquence de résonance à la température $T_0$ ;
$s = C_{12}.f_{02} - C_{11}.f_{01}$ le coefficient différentiel du 1er ordre
$\varepsilon = C_{22}.f_{02} - C_{21}.f_{01}$ le coefficient différentiel du 2ème ordre

Les coefficients de calibrage permettent à partir d'une mesure de la différence de fréquence de remonter à l'information de température. On peut montrer que :

$$T = T_0 + \frac{-s \pm \sqrt{s^2 - 4\varepsilon(\Delta_0 - \Delta f)}}{2\varepsilon} = A_0 \pm \sqrt{A_1 + A_2 \Delta f} \qquad (4)$$

Où $A_0$, $A_1$ et $A_2$ sont les coefficients de calibrage comme explicité dans le préambule de la présente description.

4) Concernant les dispersions technologiques :

Les procédés de fabrication des résonateurs étant maîtrisés avec une certaine précision, l'orientation cristalline ($\varphi$, $\theta$, $\psi$) et la géométrie du résonateur (liés aux paramètres $a$ et $h$ uniquement, en effet on considère que la période de métallisation $p$ est parfaitement maîtrisée) ne sont jamais, en pratique, exactement celles visées et de plus elles ne sont pas parfaitement reproductibles.

Pour un échantillon suffisamment grand, ces paramètres suivent des distributions gaussiennes (loi des grands nombres) dont les moyennes et les écarts types peuvent être déterminés expérimentalement. L'ensemble des variations des cinq paramètres $\varphi$, $\theta$, $\psi$, $a$ et $h$ est appelé dispersions technologiques.

Les paramètres $f_0$, $C_{11}$, $C_{12}$ et $C_{21}$, $C_{22}$ étant dépendants de $\varphi$, $\theta$, $\psi$, $a$ et $h$, peuvent aussi être maîtrisés avec une certaine précision et suivre des distributions centrées autour d'une moyenne avec un certain écart type.

La demanderesse est partie de l'hypothèse qu'il y avait trois paramètres prépondérants en terme de dispersions technologiques par rapport à l'ensemble des cinq paramètres $f_0$, $C_{11}$, $C_{12}$ et $C_{21}$, $C_{22}$.

Les trois paramètres prépondérant dans les dispersions technologiques sont les suivants:

-    la dispersion sur l'angle de coupe $\theta$ qui correspond en notation IEEE à la coupe (YXl)/$\theta$ ;
-    la dispersion sur l'épaisseur de métallisation a ;
-    la dispersion sur la largeur d'électrode h.

En effet, les coupes des substrats sont choisies telles qu'elles répondent aux critères : $\varphi$=0 et $\psi$=0 ce qui correspond à l'orientation cristalline (YXwlt)/$\varphi$=0/$\theta$/$\psi$=0 dans la notation IEEE.

Or les points $\varphi$=0 et $\psi$=0 correspondent à des points d'annulation de l'ensemble des dérivées par rapport à $\varphi$ et $\psi$. Les variations des paramètres suivants pris en compte ($f_0$, $C_1$, $C_2$) peuvent être considérées nulles autours de ces points :

$$\left.\frac{\partial f_0}{\partial \varphi}\right|_{\varphi=0} = 0 \qquad \left.\frac{\partial C_1}{\partial \varphi}\right|_{\varphi=0} = 0 \quad \left.\frac{\partial C_2}{\partial \varphi}\right|_{\varphi=0} = 0$$

$$\qquad (5)$$

$$\left.\frac{\partial f_0}{\partial \psi}\right|_{\psi=0} = 0 \qquad \left.\frac{\partial C_1}{\partial \psi}\right|_{\psi=0} = 0 \qquad \left.\frac{\partial C_2}{\partial \psi}\right|_{\psi=0} = 0$$

Typiquement et à titre d'exemple, il peut être considéré les dispersions suivantes sur ces 3 paramètres :

-    une dispersion de largeur d'électrode : $\Delta a$ = +/- 0.06 $\mu$m ;
-    une dispersion d'épaisseur de métallisation : $\Delta h$ = +/- 30 Angströms ;
-    une dispersion d'angle de coupe : $\Delta \theta$ = +/- 0.05 ˚.

Dans l'hypothèse ou les 3 paramètres suivent des distributions gaussiennes, on appelle dispersion +/- 3 fois l'écart type du paramètre considéré :

-    $\Delta a$ = +/- 3. $\sigma(a)$
-    $\Delta h$ = +/- 3. $\sigma(h)$

- $\Delta\theta = +/- 3. \, \sigma(\theta)$

Avec $\sigma(a)$, $\sigma(h)$, $\sigma(\theta)$ respectivement les écarts types de la largeur d'électrode $a$, de l'épaisseur de métallisation h et de l'angle de coupe $\theta$.

A noter que pour une distribution gaussienne de moyenne $\mu$ et d'écart type $\sigma$, on a 99.74 % de la population la plus probable dans l'intervalle $[\mu\text{-}3.\sigma,\mu\text{+}3.\sigma]$ :

$$P(\mu - 3.\sigma < X < \mu + 3.\sigma) = 0.9974 \qquad\qquad (6)$$

Dans la suite de la description on appelle valeur nominale, les valeurs des paramètre $a$, $h$ ou $\theta$ visées en fabrication dénommées ci-après : $a_{nom}$, $h_{nom}$, $\theta_{nom}$.

De plus, pour chacun des 3 paramètres, il est considéré les cas suivants :

$$
\begin{aligned}
a_{\min} &= a_{nom} - \Delta a & a_{\max} &= a_{nom} + \Delta a \\
h_{\min} &= h_{nom} - \Delta h & h_{\max} &= h_{nom} + \Delta h & \qquad (7)\\
\theta_{\min} &= \theta_{nom} - \Delta\theta & \theta_{\max} &= \theta_{nom} + \Delta\theta
\end{aligned}
$$

5) Concernant l'opération de calibrage de capteurs :

Les paramètres $f_0$, $C_1$, $C_2$ maîtrisés avec une certaine précision, sont répartis selon une distribution centrée autour d'une moyenne avec un certain écart type. Les lois de variations en température des résonateurs ne sont donc pas identiques pour tous les capteurs et il en est de même pour les coefficients de calibrage.

Pour obtenir une précision maximale de mesure de la température, les coefficients de calibrage doivent donc être calculés individuellement pour chaque capteur. Pour cela, il est nécessaire de mesurer $\Delta f(T)$ sur toute la gamme de température où le capteur est utilisé de manière à ajuster les coefficients $\Delta_0$, $s$, $\varepsilon$ et calculer finalement $A_0$, $A_1$ et $A_2$.

Cette opération est très longue et peu compatible d'une production de gros volumes, on cherche donc à s'en affranchir.

Parmi les solutions envisageables pour mener à bien une fabrication collective de capteurs SAW sans calibrage il peut être envisagé d'utiliser un jeu de coefficients de calibrage communs pour un ensemble de capteurs tout en gardant une précision de mesure acceptable. De plus, un nombre limité de capteurs peut être mesuré en température (échantillon représentatif) permettant de déterminer un jeu de coefficients de calibrage moyen utilisé pour l'ensemble des capteurs. Il convient alors qu'un jeu de coefficients de calibrage soit commun au plus grand nombre de capteurs possible, l'idéal étant même qu'un jeu de coefficients soit commun à tous les capteurs d'un type donné (défini par l'orientation cristalline et la géométrie de chacun des 2 résonateurs). On réalise alors ce que l'on appelle un « capteur sans calibrage ».

Le Demandeur a proposé à cet effet dans la demande de brevet FR 2 922 305 un procédé de fabrication collective de capteurs de température et de pression sans calibrage basée notamment sur des mesures de valeur de sensibilité.

De manière générale, en considérant la loi de variations différentielles en température donnée par l'expression (3), on voit qu'il est nécessaire de réduire les dispersions de $\Delta_0$, $s$ et $\varepsilon$, si on veut avoir un jeu de coefficients de calibrage communs pour tous les capteurs, tout en ayant une bonne précision de mesure de la fréquence.

Une solution est de réduire les dispersions de $f_{01}$, $C_{11}$, $C_{21}$, $f_{02}$, $C_{12}$ et $C_{22}$. Cela conduit à réaliser un tri sur chacun des 3 paramètres des deux résonateurs. Cette approche n'est cependant pas celle retenue dans la présente invention pour les raisons suivantes :

- un des objectifs est de ne pas mesurer individuellement les capteurs en température, on ne connaît donc pas les valeurs de $C_{11}$, $C_{21}$, $C_{12}$ et $C_{22}$ pour chaque capteur.
- de plus, les calculs ont montré qu'un tri tel que présenté réduit les rendements de manière trop importante si l'on veut une précision de mesure acceptable.

Dans ce contexte et pour résoudre les problèmes précités, la présente invention concerne un nouveau procédé de fabrication collective de capteurs sans calibrage permettant de conserver une précision de mesure acceptable.

Plus précisément la présente invention a pour objet un procédé de fabrication collective de capteurs interrogeables à distance, chaque capteur comportant au moins un premier résonateur et un second résonateur, chaque résonateur comportant des transducteurs à ondes acoustiques de conception telle qu'ils présentent respectivement une première et une seconde fréquences de fonctionnement, **caractérisé en ce qu'**il comporte les étapes suivantes :

- la fabrication d'une première série de premiers résonateurs $RT_{1i}$ présentant une première fréquence de résonance à température ambiante $f_{1i}$ et une première capacité statique $C_{1i}$ ;
- la fabrication d'une seconde série de seconds résonateurs $RT_{2j}$ présentant une seconde fréquence de résonance à température ambiante $f_{2j}$ et une seconde capacité statique $C_{2j}$ ;
- une série de mesures électriques de l'ensemble de la première série de premiers résonateurs et de l'ensemble de la seconde série de seconds résonateurs, de manière à déterminer des premiers couples $(f_{1i}, C_{1i})$ et des seconds couples $(f_{2j}, C_{2j})$ de fréquence de résonance et de capacité statique de chacun des premiers et seconds résonateurs ;
- une série d'appariements d'un premier résonateur $RT_{1i}$ et d'un second résonateur $RT_{2j}$ selon le cumul des deux critères suivants : la dispersion sur la différence de fréquence de résonance $(f_{1i} - f_{2j})$ est inférieure à une première valeur seuil (Sf) et la dispersion sur la différence de capacité statique $(C_{1i} - C_{2j})$ est inférieure à une seconde valeur seuil de (Sc).

Selon une variante de l'invention, les mesures électriques sont effectuées en déterminant des mesures du coefficient de réflexion S11 ou des mesures d'admittance Y11 ou bien encore des mesures d'impédance Z11.

Selon une variante de l'invention les mesures électriques sont effectuées avec un analyseur de réseau.

Selon une variante de l'invention, les mesures de capacité statique sont réalisées avec un capacimètre à haute précision.

Selon une variante de l'invention, les première et seconde fréquences de résonance sont proches et situées dans la gamme de fréquences ISM [433.05 MHz, 434.79 MHz] , la valeur seuil Sf étant inférieure ou égale à environ quelques kHz et /ou la valeur seuil Sc étant inférieure ou de l'ordre du femtoFarad.

Selon une variante de l'invention, le procédé comprend pour chaque premier résonateur de la première série, la sélection d'un second résonateur de la deuxième série de manière à satisfaire les deux critères d'appariement.

Selon une variante de l'invention, le procédé comprend la fabrication de premiers résonateurs sur un premier substrat et la fabrication de seconds résonateurs sur un second substrat.

Selon une variante de l'invention, les résonateurs sont réalisés sur des substrats en quartz de coupes différentes.

Selon une variante de l'invention, les premier et second substrats sont définis par des angles de coupe θ selon la norme IEEE (YXl)/θ , de 24˚ et 34˚ de manière à générer des résonateurs de fréquence de 433 MHz et de 434 MHz.

Selon une variante de l'invention, le procédé comprend les étapes suivantes :

- la fabrication de premiers résonateurs $(RT_{1i})$ sur un premier substrat $(S_1)$ et la fabrication de seconds résonateurs $(RT_{i2})$ sur un second substrat $(S_2)$ ;
- des découpes unitaires de premières et de secondes puces comportant respectivement les premiers et seconds résonateurs à partir desdits substrats ;
- l'appariement d'une première et d'une seconde puces ;
- l'assemblage des paires de puces dans un boîtier.

Selon une variante de l'invention, le procédé comprend :

- la fabrication de premiers résonateurs sur un premier substrat et la fabrication de seconds résonateurs sur un second substrat ;
- des découpes unitaires de premières et de secondes puces comportant respectivement les premiers et seconds résonateurs à partir desdits substrats;
- l'assemblage en boîtier individuel des premières puces et des secondes puces dans des boîtiers individuels ;
- l'appariement d'une première et d'une seconde puces mises au préalable en boîtier.

Selon une variante de l'invention, le capteur est un capteur de température.

Selon une variante de l'invention, les premiers résonateurs sont orientés sur le premier substrat selon une première direction, les seconds résonateurs sont orientés sur le second substrat selon une seconde direction, lesdites directions correspondant aux directions de propagation des ondes de surface, et ce de manière à ce que la première direction fasse un angle non nul avec la seconde direction.

L'invention sera mieux comprise et d'autres avantages apparaîtront à la lecture de la description qui va suivre donnée à titre non limitatif et grâce aux figures annexées parmi lesquelles :

- la figure 1 illustre une structure de résonateur utilisée dans un capteur de l'invention ;

- la figure 2 illustre l'évolution de la fréquence de résonance (MHz) en fonction de h / λ en % pour un angle de coupe de 24˚ et ce pour différents couples (θ, a) ;
- la figure 3 illustre l'évolution de la fréquence de résonance (MHz) en fonction de h / λ en % pour un angle de coupe de 34˚ et ce pour différents couples (θ, a) ;
- la figure 4 illustre l'évolution de la capacité statique (pF) en fonction du taux de métallisation pour un angle de coupe de 24 ˚ et ce pour différents couples (θ, h) ;
- la figure 5 illustre l'évolution de la capacité statique (pF) en fonction du taux de métallisation pour un angle de coupe de 34 ˚ et ce pour différents couples (θ, h) ;
- la figure 6 illustre la densité de probabilité d'erreur obtenue lors d'une opération d'appariement avec un critère +/- 0.2 σ(X) dans le procédé de fabrication collective de l'invention ;
- la figure 7 la densité de probabilité d'erreur obtenue lors d'une opération d'appariement avec un critère +/- 0.1 σ(X) utilisée dans le procédé de fabrication collective de l'invention.

La présente invention a pour objet de proposer un procédé efficace de fabrication collective de capteur passif à ondes acoustiques interrogeables à distance et comportant avantageusement au moins deux résonateurs, issus de la fabrication de deux séries de résonateurs, appariés deux à deux.

L'invention est décrite ci-après dans le cadre de deux résonateurs présentant des fréquences de résonance proches, typiquement cela est le cas avec une fréquence $f_{01}$ ~ 433.6 MHz et une fréquence $f_{02}$ ~ 434.4 MHz.

Les résonateurs R1 peuvent être réalisés à la surface d'une coupe de quartz (XYI)/24 et les résonateurs R2 peuvent être réalisés à la surface d'une coupe de quartz (XYI)/34.

Néanmoins, l'invention pourrait être mise en oeuvre avec des autres coupes.

La demanderesse est partie du constat qu'on pouvait réaliser l'approximation suivante : $f_{02} \approx f_{01}$ et $df_{02} \approx df_{01}$.

Typiquement cette approximation peut être faite lorsque :

$(f0_2 - f0_1) / f0_1 \ll 1$ , ceci est typiquement le cas lorsque l'on a deux ordres de grandeur de différence.

A titre d'exemple avec une fréquence $f_{01}$ ~ 433.6 MHz et une fréquence $f_{02}$ ~ 434.4 MHz et $3.\sigma(f_{02}) \approx 3.\sigma(f_{01})$ =110 kHz, l'approximation est acceptable.

Les coefficients différentiels deviennent alors :

$$s = C_{12}.f_{02} - C_{11}.f_{01} \approx f_{01}.(C_{12} - C_{11})$$

$$\varepsilon = C_{22}.f_{02} - C_{21}.f_{01} \approx f_{01}.(C_{22} - C_{21})$$

Et les dispersions correspondant aux dérivées partielles peuvent s'écrire :

$$ds = df_{01}.(C_{12} - C_{11}) + f_{01}.d(C_{12} - C_{11})$$

$$d\varepsilon = df_{01}.(C_{22} - C_{21}) + f_{01}.d(C_{22} - C_{21})$$

A titre d'exemple considérons que le résonateur $R_1$ utilise la coupe de quartz (YXI) / 24 et le résonateur $R_2$ la coupe (YXI )/ 34. Ces deux résonateurs peuvent potentiellement être utilisés pour une mesure différentielle de la température dans une gamme de [-20, 160] ˚C et utilisant la bande ISM [433.05, 434.79] MHz.

On a dans ces conditions :

$C_{11}$ = 6.8 ppm/˚C
$C_{21}$ = -30.7 ppb/˚C$^2$
$C_{12}$ = 0.4 ppm/˚C
$C_{22}$ = -38.1 ppb/˚C$^2$

$f_{01}$ ~433.6 MHz
$\Delta f_{01} \approx \Delta f_{02}$ = 3.σ($f_{01}$) =110 kHz

$\Delta(C_{12} - C_{11}) = 3.\sigma(C_{12} - C_{11}) = 0{,}456 \text{ ppm} / \degree C$

$\Delta(C_{22} - C_{21}) = 3.6(C_{22} - C_{21}) = 0.41 \text{ ppb} / \degree C^2$

D'où :

$$\Delta s = \Delta f_{01} |C_{12} - C_{11}| + f_{01}\Delta(C_{12} - C_{11}) = 110^*10^3{}^*6.4^*10^{-6} + 433.6^*10^6{}^*0.456^*10^{-6}$$

$$= 0.704 + 197.7216$$

On voit alors que : $\Delta f_{01}.|C_{12} - C_{11}| << f_{01}.\Delta(C_{12} - C_{11})$

On peut donc faire l'approximation : $\Delta s \approx f_{01}.\Delta(C_{12} - C_{11})$

De même :

$$\Delta \varepsilon = \Delta f_{01} |C_{22} - C_{21}| + f_{01}.\Delta(C_{22} - C_{21}) = 110^*10^3{}^*7.4^*10^{-9} + 433.6^*10^6{}^*0.41^*10^{-9}$$

$$= 814^*10^{-6} + 177.776^*10^{-3}$$

On voit alors que : $\Delta f_{01}.|C_{22} - C_{21}| << f_{01}.\Delta(C_{22} - C_{21})$

On peut donc faire l'approximation : $\Delta \varepsilon \approx f_{01}.\Delta(C_{22} - C_{21})$

Si l'on revient aux 3 coefficients différentiels de température, leurs dispersions d'écrivent donc :

$$-d\Delta_0 = d(f_{02} - f_{01})$$
$$-ds \approx f_{01}.d(C_{12} - C_{11}) \qquad (8)$$
$$-d\varepsilon \approx f_{01}d(C_{22} - C_{21})$$

Ce résultat peut être étendu à d'autres coupes que celles citées ci-dessus puisque les ordres de grandeur restent les mêmes quelle que soit la coupe.

La demanderesse a montré que la dispersion de lois en température des capteurs dépend essentiellement de la dispersion de la différence de fréquence qui a fait l'objet d'une demande de brevet déposée par la demanderesse et publiée sous la référence FR 2 907 284, et des dispersions des différences de CTFs entre les 2 résonateurs.

Il est donc possible de réduire la dispersion de lois en température des capteurs en réalisant un appariement des 2 résonateurs. C'est-à-dire en sélectionnant parmi les ensembles de pièces de résonateurs $R_1$ et $R_2$ des couples de pièces tels que :

$$(f_{02} - f_{01}) - \xi(f_{02} - f_{01}) < (f_{02} - f_{01}) < (f_{02} - f_{01}) + \xi(f_{02} - f_{01})$$
$$(C_{12} - C_{11}) - \xi(C_{12} - C_{11}) < (C_{12} - C_{11}) < (C_{12} - C_{11}) + \xi(C_{12} - C_{11}) \qquad (9)$$
$$(C_{22} - C_{21}) - \xi(C_{22} - C_{21}) < (C_{22} - C_{21}) < (C_{22} - C_{21}) + \xi(C_{22} - C_{21})$$

Avec $\xi$ la variation autorisée sur la différence considérée.

Par exemple, pour les coupes considérées, on peut réaliser un appariement vérifiant :

$$795 \text{ kHz} < (f_{02} - f_{01}) < 805 \text{ kHz avec } \xi(f_{02} - f_{01}) = 5 \text{ kHz}$$

$$-6.45 \text{ ppm/}\degree C < (C_{12} - C_{11}) < -6.35 \text{ ppm/}\degree C \text{ avec } \xi(C_{12} - C_{11}) = 0.05 \text{ ppm/}\degree C$$

$$7.35\ \text{ppb/℃}^2 < (C_{22} - C_{21}) < 7.45\ \text{ppb/℃}^2\ \text{ avec } \xi(C_{22} - C_{21}) = 0.05\ \text{ppb/℃}^2$$

L'avantage de l'appariement est de permettre des rendements beaucoup plus élevés qu'un tri sur les paramètres de résonateurs pris séparément pour des dispersions de lois en température identiques.

Il apparaît ainsi que l'appariement peut réduire les dispersions de lois en température en gardant des rendements acceptables.

Il est explicité ci-après comment, il est ainsi possible de réaliser un appariement sur la différence de CTFs sans mesurer individuellement les résonateurs en température, ce qui constitue une caractéristique majeure de la présente invention.

La demanderesse est partie du constat que les résonateurs utilisent en général des points dits d'insensibilité à la largeur d'électrodes de manière à ce que la fréquence de résonance ne dépend « quasiment » pas de celle-ci grâce à des règles de conception imposées. Pour cela, on cherche un point pour lequel :

$$\left.\frac{\partial f_0}{\partial a}\right|_{a = a_{nom}} = 0 \qquad\qquad (10)$$

La fréquence de résonance, du résonateur ne dépend alors plus que de l'épaisseur de métallisation et de l'angle de coupe $\theta$.

De plus, on peut facilement montrer que les dispersions de fréquences de résonance dépendent très majoritairement des dispersions d'épaisseur h de métallisation.

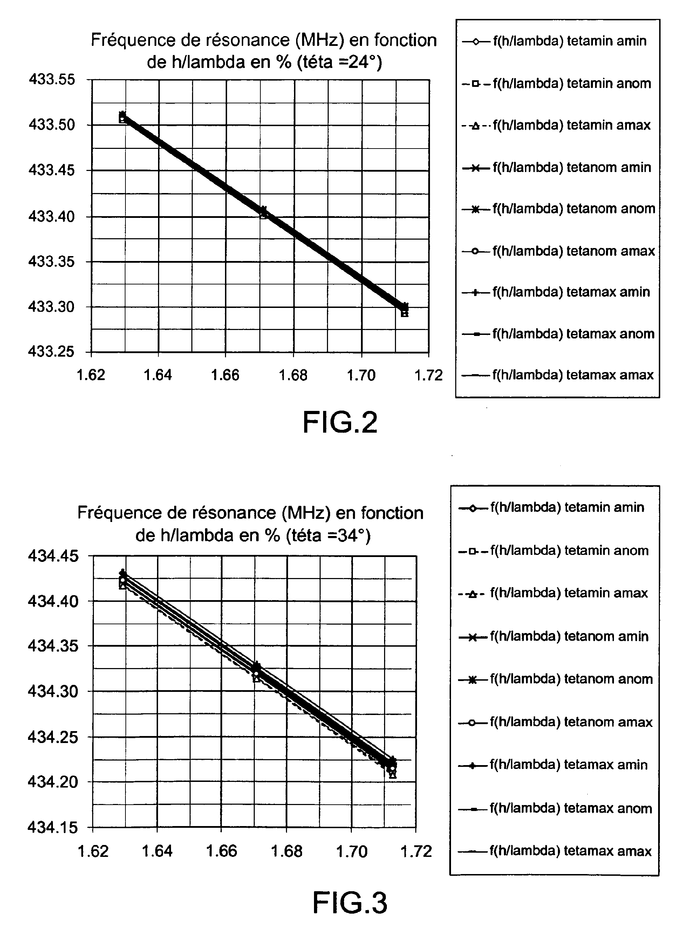

La figure 2 illustre cet effet pour un exemple de coupe avec $\theta = 24°$. Il apparait que les courbes correspondant à des variations $\Delta\theta$ de + ou - 0,05 ° autour de 24 ° sont toutes confondues pour différentes valeurs de a ($a_{nom}$, $a_{min}$ et $a_{max}$), l'ensemble des courbes étant relatives aux couples suivants : ($\theta_{min}$, $a_{min}$), ($\theta_{min}$, $a_{nom}$), ($\theta_{min}$, $a_{max}$), ($\theta_{nom}$, $a_{min}$), ($\theta_{nom}$, $a_{nom}$), ($\theta_{nom}$, $a_{max}$), ($\theta_{max}$, $a_{min}$), ($\theta_{max}$, $a_{nom}$), ($\theta_{max}$, $a_{max}$).

Le même phénomène est obtenu avec un angle de coupe $\theta = 34°$ et illustré par la figure 3,

Il ressort de l'ensemble de ces courbes que la fréquence de résonance des résonateurs dépend donc essentiellement des dispersions sur les épaisseurs h de métallisation.

Si l'on réalise un tri sur les fréquences de résonance réduisant les dispersions de celles-ci, on réduit ainsi très majoritairement les dispersions d'épaisseurs de métallisation.

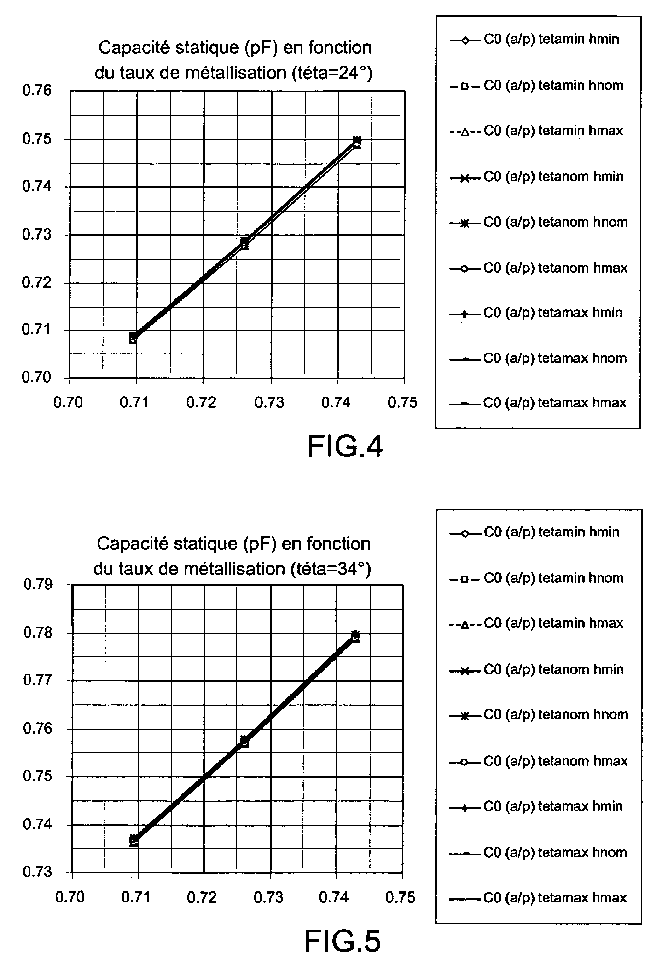

Par ailleurs la demanderesse a mis en évidence que la dispersion de valeur de capacité statique dépend très majoritairement de la dispersion de largeur d'électrode comme l'illustrent les figures 4 et 5 relatives à l'évolution des capacités statiques en fonction du taux de métallisation normalisé a/p et ceux pour les deux angles de coupe $\theta = 24°$ et $\theta = 34°$, l'ensemble des courbes étant relatives ($\theta_{min}$, $h_{min}$), ($\theta_{min}$, $h_{nom}$), ($\theta_{min}$, $h_{max}$), ($\theta_{nom}$, $h_{min}$), ($\theta_{nom}$, $h_{nom}$), ($\theta_{nom}$, $h_{max}$), ($\theta_{max}$, $h_{min}$), ($\theta_{max}$, $h_{nom}$), ($\theta_{max}$, $h_{max}$).

En parallèle, la demanderesse s'est intéressée à la capacité statique notée $C_0$ correspondant à la capacité crée par le transducteur à peignes inter-digités et les électrodes successives soumises à des différences de potentiels électriques . On peut montrer que les dispersions de la valeur de cette capacité dépendent majoritairement des dispersions de largeur d'électrodes .

Un tri sur les valeurs de capacité statique visant à réduire leurs dispersions réduit ainsi très majoritairement les dispersions de largeurs d'électrodes. On note $C_{01}$ la capacité statique du résonateur $R_1$ et $C_{02}$ la capacité statique du résonateur $R_2$

Le principe de la présente invention repose sur le fait de réduire la dispersion de la différence de CTFs (1$^{er}$ et 2$^{ème}$ ordres) sans mesurer les résonateurs individuellement en température.

Il a été démontré précédemment que $f_0$, $C_1$, $C_2$ dépendaient uniquement de a, h, $\theta$, et qu'il était possible : d'une part de réduire la dispersion d'épaisseur de métallisation en réalisant un tri sur la fréquence de résonance et d'autre part de réduire la dispersion de largeur d'électrode en réalisant un tri sur la capacité statique des résonateurs.

Il est donc possible de réduire la dispersion de CTFs sans mesurer les capteurs en température mais en réalisant une mesure de paramètres électriques à température ambiante. Cependant, on ne souhaite pas réaliser un tri sur les résonateurs séparément mais utiliser un appariement comme indiqué précédemment de manière à ne pas pénaliser les rendements.

L'idée principale de la présente invention consiste donc à réaliser un appariement de $R_1$ et $R_2$ de manière à réduire les dispersions de $f_{02}$ - $f_{01}$ et $C_{02}$ - $C_{01}$, pour réduire en final les dispersions de $C_{12}$ - $C_{11}$ et $C_{22}$ - $C_{21}$.

Un appariement sur $f_{02}$ - $f_{01}$ et $C_{02}$ - $C_{01}$ réduit significativement les dispersions de $h_2$ - $h_1$ et $a_2$ - $a_1$ et les

réductions des dispersions de $h_2$ - $h_1$ et $a_2$ - $a_1$ obtenues génèrent une réduction significative des dispersions de $C_{12}$ - $C_{11}$ et $C_{22}$ - $C_{21}$.

Avantageusement, les mesures du coefficient de réflexion électrique S11 des résonateurs sont réalisées avec des pointes présentant une impédance caractéristique de 50 ohms connectées à un analyseur de réseau. Au préalable un calibrage des pointes (circuit ouvert, court-circuit, charge adaptée, et correction du déphasage lié à la longueur électrique du moyen de mesure) aura été réalisé.

Un enregistrement de la variation du paramètre S11 dans la bande de fréquence d'intérêt est effectué. Les valeurs du module et de la phase de S11 sont donc disponibles avec un pas d'échantillonnage fréquentiel suffisamment faible pour évaluer correctement la fréquence de résonance (à partir du maximum de la conductance). Un ajustement de paramètre couramment dénommé « fit » correspondant à la variation du coefficient S11 est ensuite typiquement effectué par rapport à un modèle de type Butterworth Van Dyck composé d'un circuit RLC série avec la capacité statique du dispositif SAW en parallèle. A l'issue de l'opération de « fit » on connaît donc la capacité statique et la fréquence de résonance du résonateur à la fréquence de résonance.

Une méthode alternative peut également être employée ; celle-ci consiste à utiliser un capacimètre haute précision (inférieure au femtoFarad).

La demanderesse a estimé les rendements d'un appariement par cumul des paramètres $f_{02}$ - $f_{01}$ et $C_{02}$ - $C_{01}$ avec la première série de résonateurs $R_1$ et la seconde série de résonateurs $R_2$

Les variables $f_{01}$, $f_{02}$, $C_{01}$, $C_{02}$ sont considérées comme des variables aléatoires gaussiennes. Les moyennes et les écarts types de ces variables sont celles issues de données expérimentales. On considère pour cela que l'étendue est égale à 6 fois l'écart type :

$$\max(X) - \min(X) = 6.\sigma(X)$$

Les écarts types utilisés sont les suivants :

$$\sigma(f_{01}) = \sigma(f_{02}) = 37 \text{ kHz}$$

$$\sigma(C_{01}) = \sigma(C_{02}) = 7 \text{ fF}$$

L'algorithme utilisé pour réaliser l'appariement n'utilise pas de méthode d'optimisation, on ne teste pas différents couples de pièces pour maximiser le nombre de pièces appareillées. On parcourt simplement l'ensemble des pièces de résonateurs $R_1$ et on sélectionne pour chacune d'entre elles un résonateur $R_2$ telle que les différences $f_{02}$ - $f_{01}$ et $C_{02}$ - $C_{01}$ vérifient le critère d'appariement.

Enfin, en pratique, il s'avère que l'appariement est réalisable à condition de se limiter à un wafer de résonateur $R_1$ et un wafer de résonateur $R_2$ dans le choix des couples de pièces à appareiller. Or le nombre de résonateurs pouvant être réalisés sur un wafer est approximativement de 1200. Les rendements calculés correspondent donc à un appariement de 1200 pièces de résonateurs $R_1$ et 1200 pièces de résonateurs $R_2$.

Le Tableau 1 ci-dessous présente les valeurs des rendements atteignables en fonction du critère d'appariement :

| Critère d'appariement sur $f_{02}$ - $f_{01}$ et $C_{02}$ - $C_{01}$ | Critère d'appariement sur $f_{02}$ - $f_{01}$ en kHz | Critère d'appariement sur $C_{02}$ - $C_{01}$ en fF | Rendement en % |
|---|---|---|---|
| +/- σ(X) | +/- 37 | +/- 7 | 99.25 |
| +/- 0.5 σ(X) | +/- 17.5 | +/- 3.5 | 97.6 |
| +/- 0.2 σ(X) | +/-7.4 | +/- 1.4 | 87.7 |
| +/- 0.1σ(X) | +/- 3.7 | +/- 0.7 | 71.6 |
| +/- 0.05σ(X) | +/- 1.85 | +/- 0.35 | 47.1 |
| +/- 0.01 σ(X) | +/- 0.37 | +/- 0.07 | 3.5 |
| +/- 0.005 σ(X) | +/- 0.185 | +/- 0.035 | 1.3 |

Les deux cas d'appariement à +/- 0.2 σ(X) et +/- 0.1 σ(X) sont particulièrement intéressants dans la mesure où ils conduisent à des rendements respectivement de 87.7 % et 71.6 % compatibles d'objectifs industriels et imposant des contraintes en terme de dispersion accessibles.

En effet, dans chaque cas, on calcule tout d'abord la dispersion de $a_2$ - $a_1$ à partir de la dispersion de $C_{02}$ - $C_{01}$ en considérant que $C_{02}$ - $C_{01}$ dépend uniquement de $a_2$ - $a_1$. A partir de la dispersion de $a_2$ - $a_1$ calculée et de la dispersion de $\theta_2$ - $\theta_1$, on calcule ensuite l'incertitude sur $f_{02}$ - $f_{01}$ qui est ajoutée au critère d'appariement sur $f_{02}$ - $f_{01}$ pour avoir la gamme de variations totale de $f_{02}$ - $f_{01}$ attribuable à $h_2$ - $h_1$ (prise en compte du cas où les variations dues à $h_2$ - $h_1$ et celles dues à $a_2$ - $a_1$ et $\theta_2$ - $\theta_1$ sont de signes opposés). Ayant calculé la gamme de variations totale de $f_{02}$ - $f_{01}$ attribuable à $h_2$ - $h_1$, on calcule la dispersion de $h_2$ - $h_1$. Enfin, connaissant les dispersions de $h_2$ - $h_2$, $a_2$ - $a_1$ et $\theta_2$ - $\theta_1$, on calcule les dispersions de $C_{12}$ - $C_{11}$ et $C_{22}$ - $C_{21}$.

Les résultats associés aux 2 cas, ainsi que les étapes intermédiaires sont résumées dans le tableau 2 ci-dessous.

| Critère d'appariement | +/- 0.2 σ(X) (+/- 7.4 kHz / +/- 1.4 fF) | | +/- 0.1 σ(X) (+/- 3.7 kHz / +/- 0.7 fF) | |
|---|---|---|---|---|
| $\dfrac{\Delta(a_2 - a_1)}{p}$ | +/- 0.0018 | | +/- 0.0012 | |
| Incertitude $f_{02}$ - $f_{01}$ due à $\Delta(\theta_2 - \theta_1)$ | +/- 5.5 kHz | | +/- 5.5 kHz | |
| Incertitude $f_{02}$ - $f_{01}$ due à $\Delta(a_2 - a_1)$ | +/- 1.25 kHz | | +/- 1.15 kHz | |
| Incertitude totale | +/- 14.15 kHz | | +/- 10.35 kHz | |
| $\dfrac{\Delta(h_2 - h_1)}{p}$ | +/- 0.0068 % | | +/- 0.0054 % | |
| Ordre Coefficients différentiels de température | $C_1$ | $C_2$ | $C_1$ | $C_2$ |
| $\Delta(C_2 - C_1)$ due à $\Delta(h_2 - h_1)$ | +/- 0.0305 ppm/˚C | +/- 0.035 ppb/˚C$^2$ | +/- 0.0285 ppm/˚C | +/- 0.0305 ppb/˚C$^2$ |
| $\Delta(C_2 - C_1)$ due à $\Delta(a_2 - a_1)$ | +/- 0.0315 ppm/˚C | +/- 0.0315 ppb/˚C$^2$ | +/- 0.027 ppm/˚C | +/- 0.0305 ppb/˚C$^2$ |
| $\Delta(C_2 - C_1)$ due à $\Delta(\theta_2 - \theta_1)$ | +/- 0.045 ppm/˚C | +/- 0.053 ppb/˚C$^2$ | +/- 0.045 ppm/˚C | +/- 0.053 ppb/˚C$^2$ |
| Somme dispersions coefficients différentiels | +/- 0.107 ppm/˚C | +/- 0.12 ppb/˚C$^2$ | +/- 0.101 ppm/˚C | +/- 0.114 ppb/˚C$^2$ |

A partir des dispersions calculées précédemment (dernière ligne du tableau 2), il est possible de déterminer la réduction de l'erreur sur la mesure de la température obtenue.

Pour cela, on calcule tout d'abord les coefficients de calibrages moyens à partir des paramètres moyens ($f_0$, $C_1$, $C_2$) obtenus en simulation pour chaque résonateurs.

Puis on réalise des tirages aléatoires à partir des dispersions obtenues.

Pour $f_{02}$ - $f_{01}$, on utilise une distribution uniforme dans [$-\Delta(f_{02}$ - $f_{01})$,$\Delta(f_{02}$ - $f_{01})$] puisqu'on apparie directement $f_{02}$ - $f_{01}$ et que le critère d'appariement est petit devant l'étendue de la gaussienne initiale. Pour $C_{12}$ - $C_{11}$ et $C_{22}$ - $C_{21}$, on utilise une distribution gaussienne à partir des dispersions calculées précédemment $\Delta(X) = 3.\sigma(X)$). Plus précisément on calcule :

$$3.\sigma(s) = \Delta s \approx f_{01}.\Delta(C_{12} - C_{11})$$

$$3.\sigma(\varepsilon) = \Delta\varepsilon \approx f_{01}.\Delta(C_{22} - C_{21})$$

Puis, on réalise des tirages aléatoires gaussiens de $s$ d'écart type $\sigma(s)$ et de $\varepsilon$ d'écart type $\sigma(\varepsilon)$.

Les paramètres (valeurs moyennes) utilisés sont les suivants :

- $E[C_{11}]$ = 6.8 ppm/˚C
- $E[C_{21}]$ = -30.7 ppb/˚C$^2$
- $E[C_{12}]$ = 0.4 ppm/˚C
- $E[C_{22}]$ = -38.1 ppb/˚C$^2$
- $E[f_{01}]$ ~433.4 MHz
- $E[f_{02}]$ ~434.5 MHz

la gamme de température considérée à titre d'exemple est définie par $T \in [-20, 250]˚C$

1) Pour un appariement à +/- 0.2 $\sigma(X)$ :

$$\Delta(f_{02} - f_{01}) = 7.4 \text{ kHz}$$

$$\sigma(s) = 0.036 \text{ ppm/°C} * 433.4 \text{ MHz} = 15.6 \text{ Hz/C}$$

$$\sigma(\varepsilon) = 0.04 \text{ ppb/°C}^2 * 433.4 \text{ MHz} = 0.0173 \text{ Hz/C}^2$$

On obtient : 3.$\sigma(Err)$ = 5.75 ˚C et 99.74 % de la population dans l'intervalle [-3.62,3.62]˚C.
2) Pour un appariement à +/- 0.1 $\sigma(X)$

$$\Delta(f_{02} - f_{01}) = 3.7 \text{ kHz}$$

$$\sigma(s) = 0.034 \text{ ppm/°C} * 433.4 \text{ MHz} = 14.735 \text{Hz/C}$$

$$\sigma(\varepsilon) = 0.038 \text{ ppb/°C}^2 * 433.4 \text{ MHz} = 0.0165 \text{ Hz/C}^2$$

On obtient : 3.$\sigma(Err)$ = 3.55 ˚C et 99.74 % de la population dans l'intervalle [-2.81,2.81]˚C.

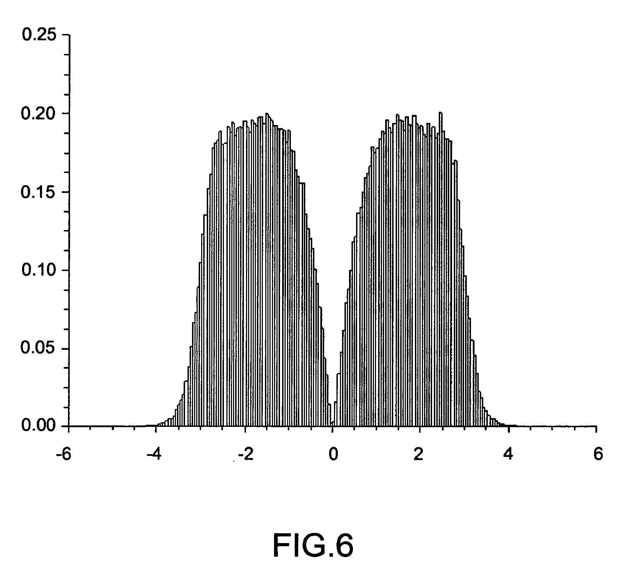

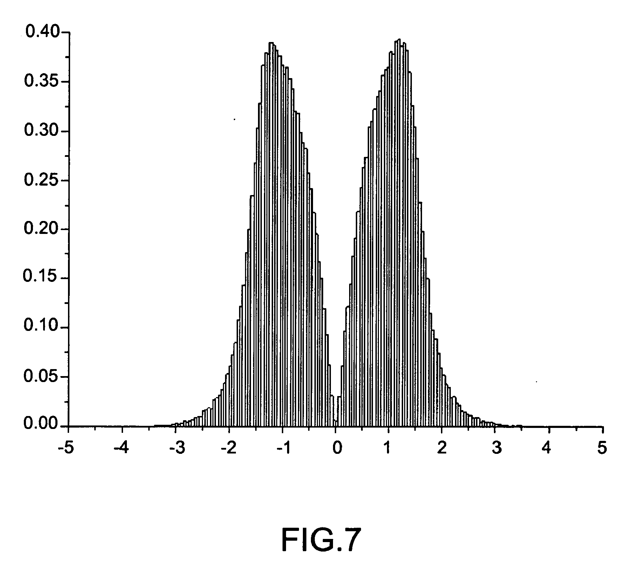

Les figures 6 et 7 montrent qu'une opération d'appariement sur le critère +/- 0.2$\sigma(X)$ conduit à obtenir un capteur de température sans calibrage fonctionnant dans la gamme -20˚C à 250˚C présentant une précision de +/- 3,6˚C dans toute la gamme avec un rendement d'appariement de 87,7% et qu'une opération d'appariement sur le critère +/-0.1 $\sigma(X)$ génère une diminution du rendement (71,6%) mais permet d'obtenir un capteur sans calibrage avec une meilleure précision (+/- 2.8˚C) dans la même gamme de température.

**Revendications**

1. Procédé de fabrication collective de capteurs interrogeables à distance, chaque capteur comportant au moins un premier résonateur et un second résonateur, chaque résonateur comportant des transducteurs à ondes acoustiques de conception telle qu'ils présentent respectivement une première et une seconde fréquences de fonctionnement, **caractérisé en ce qu'**il comporte les étapes suivantes :

   - la fabrication d'une première série de premiers résonateurs ($RT_{1i}$) présentant une première fréquence de résonance à température ambiante ($f_{1i}$) et une première capacité statique ($C_{1i}$) ;
   - la fabrication d'une seconde série de seconds résonateurs ($RT_{2j}$) présentant une seconde fréquence de résonance à température ambiante ($f_{2j}$) et une seconde capacité statique ($C_{2j}$) ;
   - une série de mesures électriques de l'ensemble de la première série de premiers résonateurs et de l'ensemble de la seconde série de seconds résonateurs, de manière à déterminer des premiers couples ($f_{1i}$, $C_{1i}$) et des seconds couples ($f_{2j}$, $C_{2j}$) de fréquence de résonance et de capacité de chacun des premiers et seconds résonateurs ;
   - une série d'appariements d'un premier résonateur ($RT_{1i}$) et d'un second résonateur ($RT_{2j}$) selon le cumul des deux critères suivants : la dispersion sur la différence de fréquence de résonance ($f_{1i}$ - $f_{2j}$) est inférieure à une première valeur seuil (Sf) et la dispersion sur la différence de capacité statique ($C_{1i}$ - $C_{2j}$) est inférieure à une seconde valeur seuil (Sc).

**2.** Procédé de fabrication collective de capteurs interrogeables à distance selon la revendication 1, **caractérisé en ce que** les mesures électriques sont effectuées par mesure du coefficient de réflexion S11 ou mesure de l'admittance Y11 ou mesure de l'impédance Z11.

**3.** Procédé de fabrication collective de capteurs interrogeables à distance selon l'une des revendications 1 ou 2, **caractérisé en ce que** les mesures électriques sont effectuées avec un analyseur de réseau.

**4.** Procédé de fabrication collective de capteurs interrogeables à distance selon l'une des revendications 1 ou 2, **caractérisé en ce que** les mesures de capacité statique sont effectuées avec un capacimètre.

**5.** Procédé de fabrication collective de capteurs interrogeables à distance selon l'une des revendications 1 à 4, caractérisé en en ce que les première et seconde fréquences sont situées dans la gamme de fréquences [433.05 MHz, 434.79 MHz], la première valeur seuil (Sf) étant inférieure ou égale à quelques kiloHertz.

**6.** Procédé de fabrication collective de capteurs interrogeables à distance selon l'une des revendications 1 à 5, caractérisé en en ce que les première et seconde fréquences sont situées dans la gamme de fréquences [433.05 MHz, 434.79 MHz], la seconde valeur seuil (Sc) étant inférieure à quelques femtoFarad.

**7.** Procédé de fabrication collective de capteurs interrogeables à distance selon l'une des revendications 1 à 6, **caractérisé en ce qu'**il comprend pour chaque premier résonateur de la première série, la sélection d'un second résonateur de la deuxième série de manière à satisfaire les deux critères d'appariement.

**8.** Procédé de fabrication collective de capteurs interrogeables à distance selon l'une des revendications 1 à 7, **caractérisé en ce qu'**il comprend la fabrication de premiers résonateurs ($RT_{1i}$) sur un premier substrat ($S_1$) et la fabrication de seconds résonateurs ($RT_{i2}$) sur un second substrat ($S_2$).

**9.** Procédé de fabrication collective de capteurs interrogeables à distance selon l'une des revendications précédentes, **caractérisé en ce que** les résonateurs sont réalisés sur des substrats en quartz de coupe différentes.

**10.** Procédé de fabrication collective de capteurs interrogeables à distance selon la revendication 9, **caractérisé en ce que** les premier et second substrats sont définis par des angles de coupe θ selon la norme IEEE (YXI)/θ, de 24° et 34° de manière à générer des résonateurs de fréquence de 433 MHz et de 434 MHz.

**11.** Procédé de fabrication collective de capteurs interrogeables à distance selon l'une des revendications précédentes, **caractérisé en ce qu'**il comprend les étapes suivantes :

- la fabrication de premiers résonateurs ($RT_{1i}$) sur un premier substrat ($S_1$) et la fabrication de seconds résonateurs ($RT_{i2}$) sur un second substrat ($S_2$) ;
- des découpes unitaires de premières et de secondes puces comportant respectivement les premiers et seconds résonateurs à partir desdits substrats ;
- l'appariement d'une première et d'une seconde puces ;
- l'assemblage des paires de puces dans un boîtier.

**12.** Procédé de fabrication collective de capteurs interrogeables à distance selon l'une des revendications précédentes, **caractérisé en ce qu'**il comprend :

- la fabrication de premiers résonateurs ($RT_{1i}$) sur un premier substrat et la fabrication de seconds résonateurs ($RT_{i2}$) sur un second substrat ;
- des découpes unitaires de premières et de secondes puces comportant respectivement les premiers et seconds résonateurs à partir desdits substrats ;
- l'assemblage en boîtier individuel des premières puces et des secondes puces dans des boîtiers individuels ;
- l'appariement d'une première et d'une seconde puces mises au préalable en boîtier.

**13.** Procédé de fabrication selon l'une des revendications précédentes, **caractérisé en ce que** le capteur est un capteur de température.

14. Procédé de fabrication selon l'une des revendications précédentes, **caractérisé en ce que** les premiers résonateurs sont orientés sur le premier substrat selon une première direction, les seconds résonateurs sont orientés sur le second substrat selon une seconde direction, lesdites directions correspondant aux directions de propagation des ondes de surface, et ce de manière à ce que la première direction fasse un angle non nul avec la seconde direction.

**Claims**

1. A method for collective manufacture of remotely pollable sensors, each sensor comprising at least one first resonator and one second resonator, each resonator comprising acoustic wave transducers that are designed so as to respectively present a first and a second operating frequency, **characterised in that** it comprises the following steps:

   - manufacturing a first series of first resonators ($RT_{1i}$) having a first resonant frequency at ambient temperature ($f_{1i}$) and a first static capacitance ($C_{1i}$);
   - manufacturing a second series of second resonators ($RT_{2j}$) having a second resonant frequency at ambient temperature ($f_{2j}$) and a second static capacitance ($C_2j$);
   - carrying out a series of electrical measurements of all of the first series of first resonators and all of the second series of second resonators so as to determine first pairs ($f_{1i}$, $C_{1i}$) and second pairs ($f_{2j}$, $C_{2j}$) of resonant frequency and capacitance of each of the first and second resonators;
   - carrying out a series of pairings of a first resonator ($RT_{1i}$) and of a second resonator ($RT_{2j}$) in accordance with the fulfilment of both of the following two criteria: the distribution over the difference of resonant frequencies ($f_{1i}$ - $f_{2j}$) is less than a first threshold value (Sf) and the distribution over the difference of static capacitances ($G_{1i}$ - $C_{2j}$) is less than a second threshold value (Sc).

2. The method for collective manufacture of remotely pollable sensors according to claim 1, **characterised in that** the electrical measurements are carried out by measuring the reflection coefficient S11 or by measuring the admittance Y11 or by measuring the impedance Z11.

3. The method for collective manufacture of remotely pollable sensors according to any one of claims 1 to 2, **characterised in that** the electrical measurements are carried out using a network analyser.

4. The method for collective manufacture of remotely pollable sensors according to any one of claims 1 to 2, **characterised in that** the static capacitance measurements are carried out using a capacitance meter.

5. The method for collective manufacture of remotely pollable sensors according to any one of claims 1 to 4, **characterised in that** the first and second frequencies are located within the frequency range [433.05 MHz, 434.79 MHz], the first threshold value (Sf) being less than or equal to several kilohertz.

6. The method for collective manufacture of remotely pollable sensors according to any one of claims 1 to 5, **characterised in that** the first and second frequencies are located within the frequency range [433.05 MHz, 434.79 MHz], the second threshold value (Sc) being less than a few femtoFarad.

7. The method for collective manufacture of remotely pollable sensors according to any one of claims 1 to 6, **characterised in that** for each first resonator of the first series it comprises selecting a second resonator from the second series so as to fulfil the two pairing criteria.

8. The method for collective manufacture of remotely pollable sensors according to any one of claims 1 to 7, **characterised in that** it comprises manufacturing first resonators ($RT_{I1}$) on a first substrate ($S_1$) and manufacturing second resonators ($RT_{i2}$) on a second substrate ($S_2$).

9. The method for collective manufacture of remotely pollable sensors according to any one of the preceding claims, **characterised in that** the resonators are made on quartz substrates with different cuts.

10. The method for collective manufacture of remotely pollable sensors according to claim 9, **characterised in that** the first and second substrates are defined by cutting angles θ, according to standard IEEE (YXI)/ θ, of 24˚ and 34˚ so as to generate frequency resonators of 433 MHz and 434 MHz.

11. The method for collective manufacture of remotely pollable sensors according to any one of the preceding claims, **characterised in that** it comprises the following steps:

   - manufacturing first resonators ($RT_{Ii}$) on a first substrate ($S_1$) and manufacturing second resonators ($RT_{i2}$) on a second substrate ($S_2$);
   - unitary cutting of first and second chips respectively comprising the first and second resonators from said substrates;
   - pairing of a first and of a second chip;
   - assembling pairs of chips in a casing.

12. The method for collective manufacture of remotely pollable sensors according to any one of the preceding claims, **characterised in that** it comprises:

   - manufacturing first resonators ($RT_{Ii}$) on a first substrate and manufacturing second resonators ($RT_{i2}$) on a second substrate;
   - unitary cutting of first and second chips respectively comprising the first and second resonators from said substrates;
   - assembling in an individual casing the first chips and the second chips in individual casings;
   - pairing a first and a second chip previously placed in a casing.

13. The manufacturing method according to any one of the preceding claims, **characterised in that** the sensor is a temperature sensor.

14. The manufacturing method according to any one of the preceding claims, **characterised in that** the first resonators are oriented on the first substrate along a first direction, the second resonators are oriented on the second substrate along a second direction, said directions corresponding to the propagation directions of the surface waves, and this is in such a way that the first direction makes a non-zero angle with the second direction.


**Patentansprüche**

1. Verfahren zur kollektiven Herstellung von fernabfragbaren Sensoren, wobei jeder Sensor wenigstens einen ersten Resonator und einen zweiten Resonator umfasst, wobei jeder Resonator Schallwellenwandler umfasst, die so ausgelegt sind, dass sie jeweils eine erste und eine zweite Betriebsfrequenz aufweisen, **dadurch gekennzeichnet, dass** es die folgenden Schritte beinhaltet:

   - Herstellen einer ersten Serie von ersten Resonatoren ($RT_{1i}$) mit einer ersten Resonanzfrequenz bei Umgebungstemperatur ($f_{1i}$) und einer ersten statischen Kapazität ($C_{Ii}$);
   - Herstellen einer zweiten Serie von zweiten Resonatoren ($RT_{2j}$) mit einer zweiten Resonanzfrequenz bei Umgebungstemperatur ($f_{2j}$) und einer zweiten statischen Kapazität ($C_{2j}$);
   - Durchführen einer Reihe von elektrischen Messungen an allen aus der ersten Serie von ersten Resonatoren und allen aus der zweiten Serie von zweiten Resonatoren, um erste Paare ($f_{1i}$, $C_{1i}$) und zweite Paare ($f_{2j}$, $C_{2j}$) von Resonanzfrequenz und Kapazität jedes der ersten und zweiten Resonatoren zu ermitteln;
   - Durchführen einer Reihe von Paarungen eines ersten Resonators ($RT_{1i}$) und eines zweiten Resonators ($RT_{2j}$) gemäß der Summe der folgenden zwei Kriterien: die Streuung auf der Differenz von Resonanzfrequenzen ($f_{1i}$ - $f_{2j}$) ist kleiner als ein erster Schwellenwert (Sf) und die Streuung auf der Differenz von statischen Kapazitäten ($C_{1i}$ - $C_{2j}$) ist kleiner als ein zweiter Schwellenwert (Sc).

2. Verfahren zur kollektiven Herstellung von fernabfragbaren Sensoren nach Anspruch 1, **dadurch gekennzeichnet, dass** die elektrischen Messungen durch Messen des Reflexionskoeffizienten S11 oder durch Messen der Admittanz Y11 oder durch Messen der Inpedanz Z11 erfolgen.

3. Verfahren zur kollektiven Herstellung von fernabfragbaren Sensoren nach Anspruch 1 oder 2, dadurch gekennzeichet, dass die elektrischen Messungen mit einem Netzwerkanalysegerät durchgeführt werden.

4. Verfahren zur kollektiven Herstellung von fernabfragbaren Sensoren nach Anspruch 1 oder 2, **dadurch gekennzeichnet, dass** die Messungen der statischen Kapazität mit einem Kapazitätsmessgerät durchgeführt werden.

5. Verfahren zur kollektiven Herstellung von fernabfragbaren Sensoren nach einem der Ansprüche 1 bis 4, **dadurch gekennzeichnet, dass** die erste und die zweite Frequenz im Frequenzbereich [433,05 MHz, 434,79 MHz] liegen, wobei der erste Schwellenwert (Sf) gleich oder kleiner als mehrere Kilohertz ist.

6. Verfahren zur kollektiven Herstellung von fernabfragbaren Sensoren nach einem der Ansprüche 1 bis 5, **dadurch gekennzeichnet, dass** die erste und zweite Frequenz im Frequenzbereich [433,05 MHz, 434,79 MHz] liegen, wobei der zweite Schwellenwert (Sc) kleiner als einige femtoFarad ist.

7. Verfahren zur kollektiven Herstellung von fernabfragbaren Sensoren nach einem der Ansprüche 1 bis 6, **dadurch gekennzeichnet, dass** es für jeden ersten Resonator der ersten Serie das Auswählen eines zweiten Resonators aus der zweiten Serie beinhaltet, um die beiden Paarungskriterien zu erfüllen.

8. Verfahren zur kollektiven Herstellung von fernabfragbaren Sensoren nach einem der Ansprüche 1 bis 7, **dadurch gekennzeichnet, dass** es das Herstellen von ersten Resonatoren ($RT_{1i}$) auf einem ersten Substrat ($S_1$) und das Herstellen von zweiten Resonatoren ($RT_{i2}$) auf einem zweiten Substrat ($S_2$) beinhaltet.

9. Verfahren zur kollektiven Herstellung von fernabfragbaren Sensoren nach einem der vorherigen Ansprüche, **dadurch gekennzeichnet, dass** die Resonatoren auf unterschiedlich geschnittenen Quarzsubstraten hergestellt werden.

10. Verfahren zur kollektiven Herstellung von fernabfragbaren Sensoren nach Anspruch 9, **dadurch gekennzeichnet, dass** das erste und zweite Substrat durch Schnittwinkel θ, gemäß der Norm IEEE (YXI)/ θ, von 24˚ und 34˚ definiert werden, um Frequenzresonatoren von 433 MHz und 434 MHz zu erzeugen.

11. Verfahren zur kollektiven Herstellung von fernabfragbaren Sensoren nach einem der vorherigen Ansprüche, **dadurch gekennzeichnet, dass** es die folgenden Schritte beinhaltet:

    - Herstellen von ersten Resonatoren ($RT_{1i}$) auf einem ersten Substrat ($S_1$) und Herstellen von zweiten Resonatoren ($RT_{i2}$) auf einem zweiten Substrat ($S_2$);
    - einheitliches Schneiden von ersten und zweiten Chips, die jeweils den ersten und zweiten Resonator umfassen, von den Substraten;
    - Paaren eines ersten und eines zweiten Chips;
    - Zusammenfügen der Chippaare in einem Gehäuse.

12. Verfahren zur kollektiven Herstellung von fernabfragbaren Sensoren nach einem der vorherigen Ansprüche, **dadurch gekennzeichnet, dass** es Folgendes beinhaltet:

    - Herstellen von ersten Resonatoren ($RT_{1i}$) auf einem ersten Substrat und Herstellen von zweiten Resonatoren ($RT_{i2}$) auf einem zweiten Substrat;
    - einheitliches Schneiden von ersten und zweiten Chips, die jeweils den ersten und zweiten Resonator umfassen, von den Substraten;
    - Zusammenfügen in einem individuellen Gehäuse der ersten Chips und der zweiten Chips in individuellen Gehäusen;
    - Paaren eines ersten und eines zweiten Chips, die zuvor in einem Gehäuse platziert wurden.

13. Herstellungsverfahren nach einem der vorherigen Ansprüche, **dadurch gekennzeichnet, dass** der Sensor einen Temperatursensor ist.

14. Herstellungsverfahren nach einem der vorherigen Ansprüche, **dadurch gekennzeichnet, dass** die ersten Resonatoren auf dem ersten Substrat in einer ersten Richtung ausgerichtet sind, die zweiten Resonatoren auf dem zweiten Substrat in einer zweiten Richtung ausgerichtet sind, wobei die Richtungen den Ausbreitungsrichtungen der Oberflächenwellen entsprechen, so dass die erste Richtung einen Winkel von ungleich null zur zweiten Richtung bildet.

FIG.1

**Fréquence de résonance (MHz) en fonction de h/lambda en % (téta =24°)**

Légende :
- —◇— f(h/lambda) tetamin amin
- —◻— f(h/lambda) tetamin anom
- —△— f(h/lambda) tetamin amax
- —✕— f(h/lambda) tetanom amin
- —✱— f(h/lambda) tetanom anom
- —○— f(h/lambda) tetanom amax
- —+— f(h/lambda) tetamax amin
- —■— f(h/lambda) tetamax anom
- ——— f(h/lambda) tetamax amax

FIG.2

**Fréquence de résonance (MHz) en fonction de h/lambda en % (téta =34°)**

Légende :
- —◇— f(h/lambda) tetamin amin
- —◻— f(h/lambda) tetamin anom
- —△— f(h/lambda) tetamin amax
- —✕— f(h/lambda) tetanom amin
- —✱— f(h/lambda) tetanom anom
- —○— f(h/lambda) tetanom amax
- —+— f(h/lambda) tetamax amin
- —■— f(h/lambda) tetamax anom
- ——— f(h/lambda) tetamax amax

FIG.3

Capacité statique (pF) en fonction du taux de métallisation (téta=24°)

FIG.4

Capacité statique (pF) en fonction du taux de métallisation (téta=34°)

FIG.5

FIG.6

FIG.7

**EP 2 264 417 B1**